Europäisches Patentamt

European Patent Office

Office européen des brevets

(11) Veröffentlichungsnummer: **0 008 049**
**B1**

(12) **EUROPÄISCHE PATENTSCHRIFT**

(45) Veröffentlichungstag der Patentschrift: **16.06.82**

(21) Anmeldenummer: **79102687.5**

(22) Anmeldetag: **27.07.79**

(51) Int. Cl.³: **H 02 K 23/44,** A 61 C 1/06, H 02 P 7/00

(54) Gleichstrom-Kleinstmotor zum Antrieb zahnärztlicher Werkzeuge.

(30) Priorität: **03.08.78 DE 2834099**

(43) Veröffentlichungstag der Anmeldung:
**20.02.80 Patentblatt 80/4**

(45) Bekanntmachung des Hinweises auf die Patenterteilung:
**16.06.82 Patentblatt 82/24**

(84) Benannte Vertragsstaaten:
**AT CH FR GB IT**

(56) Entgegenhaltungen:
**CH - A - 391 070**
**DE - A1 - 2 454 609**
**DE - C - 148 716**
**DE - C - 340 672**
**DE - C - 868 175**
**DE - C - 939 463**
**DE - U - 6 610 841**
**FR - A - 467 012**
**GB - A - 995 691**

(73) Patentinhaber: **SIEMENS AKTIENGESELLSCHAFT**
**Berlin und München**
**Postfach 22 02 61**
**D-8000 München 22 (DE)**

(72) Erfinder: **Landgraf, Hermann**
**Donaustrasse 1**
**D-6148 Heppenheim (DE)**
Erfinder: **Wohlgemuth, Jürgen, Dipl.-Ing.**
**Brüder-Knauss-Strasse 61**
**D-6100 Darmstadt (DE)**

Courier Press, Leamington Spa, England.

## Gleichstrom-Kleinstmotor zum Antrieb zahnärztlicher Werkzeuge

Die Erfindung bezieht sich auf einen Gleichstrom-Kleinstmotor mit permanentmagnetischer Erregung zum Antrieb eines in einem zahnärztlichen Handinstrument drehbar gelagerten Werkzeuges, enthaltend ein zylindrisches Motorgehäuse mit einer einen stationären Rückschluß bildenden und zu diesem Zweck weichmagnetischen Material Bestehenden Hülse, in der diametral einander gegenüberliegend paarweise Dauermagnete zur Erregung des Ankers angeordnet sind.

Bei solchen Kleinstmotoren ist es an sich üblich, die Drehzahl innerhalb eines vorgegebenen Drehzahlbereiches kontinuierlich zu ändern. Dies geschieht in bekannter Weise z.B. mit Hilfe eines als Fußschalter ausgebildeten Potentiometers durch Änderung der Ankerspannung. Der mit dem Potentiometer zu bestreichende Drehzahlbereich beträgt etwa 1:10, z.B. 4.000 bis 40.000 Upm, oder 12.000 bis 120.000 Upm, je nachdem, welches Handstück verwendet wird.

Bei nicht für zahnärztliche Zwecke (zum Antrieb von zahnärztlichen Werkzeugen) bestimmten Gleichstrommotoren ist es bekannt, zum Zwecke des optimalen Einstellens bzw. Bestimmens des Arbeitspunktes de Motors dessen Magnetfluß zu ändern. In der CH—A—391 070 beispielsweise wird hierzu u.a. vorgeschlagen, auf die Innenflächen der beiden Dauermagnete, auf denen außen ein als Rückschluß dienender Zylinder aus Weicheisen sitzt, einen abgeschrägten Weicheisenzylinder verrehbar anzuordnen. Nach dem Zusammenbau des Motors kann mit Hilfe eines Werkzeuges, das von außen in eine Aussparung eingeführt wird, der abgeschrägte Weicheisenzylinder verdreht und damit der Magnetfluß des Motors verändert werden.

Um insbesondere die Anlaufspannung eines Elektromotors ändern zu können, ist es außerdem aus der FR—A—467 012 bekannt, in den Luftspalt zwischen Läufer und Magnetpolen des Ständers einen Ring mit Segmenten aus weichmagnetischem Material anzuordnen und den Ring verdrehbar zu lagern. Durch Verdrehen des Ringes kann so der Magnetfluß und damit die Anlaufspannung des Motors verändert werden. Nähere Details, insbesondere über die Verstellbarkeit des Ringes, sind der Druckschrift nicht zu entnehmen.

Aus der DE—C—939 463 ist außerdem eine Kleinmaschine bekannt, beit der zur Einstellung' der Motordrehzahl ebenfalls im Rahmen eines optimalen Einstellens des Arbeitspunktes ein umlaufender Anker zwischen einem feststehenden Dauermagnetkern und einem Rückschlußring vorgesehen ist. Der Rückschlußring ist schraubbar im Motorgehäuse angeordnet und läßt sich axial gegen den Dauermagnetkern verschieben.

In der zahnärztlichen Technik, wo man die eingangs genannten Gleichstrom-Kleinstmotoren zum Antrieb von Bohr-, Schleif- oder Fräswerkzeugen einsetzt, liegt eine völlig andere Problemstellung vor.

Hier besteht, um den unterschiedlichen Forderungen, die bei den verschiedensten Arbeiten, die in der zahnärztlichen Praxis mit einem Handstück durchzuführen sind (prophylaktische Arbeiten, Bohren, Schleifen, Fräsen, Polieren), gerecht zu werden, neben der eingangs bereits erwähnten, sich in einem vorgegegenen Drehzahlbereich bewegenden Drehzahländerungsmöglichkeit noch die weitere Forderung, den vorhandenen Drehzahl*bereich* nach oben oder unten hin erweitern zu können. Bisher war dies nur über mechanische Getriebe durch Auswechseln eines anderen, auf den Antriebsmotor aufsteckbaren Handstückes mit einem anderen geeigneten Unter- order Übersetzungsgetriebe möglich.

Nun stellen aber mechanische Getriebe ohnehin und insbesondere bei so kleinen Abmessungen und relativ hohen Drehzahlen, wie sie bei den zahnärztlichen Handstückantrieben gegeben sind, besonders wartungsbedürftige Verschleißteile dar. Außerdem erfordern sie einen relativ großen Fertigungsaufwand. Wegen des bei solchen, zum Antrieb zahnärztlicher Werkzeuge vorgesehenen Kleinstmotoren zur Verfügung stehenden, relativ geringen Raumes zur Unterbringung eines Getriebes, werden an die Getriebeteile außerdem besonders hohe Anforderungen an Material und Einhaltung von Passungen gestellt. Ein weiterer Nachteil bei den bekannten zahnärztlichen Handstücksystemen ist der häufige Wechsel der Handstücke, den der Arzt während einer Patientenbehandlung durchführenmuß, um in unterschiedlichen Drehzahlbereichen arbeiten zu können.

Der in den Ansprüchen 1 und 4 angegebenen Erfindung liegt die Aufgabe zugrunde, demgegenüber eine Verbesserung und Vereinfachung zu schaffen. Es soll also ein Gleichstrom-Kleinstmotor zum Antrieb zahnärztlicher Werkzeuge geschaffen werden, bei dem unter weitgehender Beibehaltung der Leistung und der bisherigen Drehzahleinstellmöglichkeit (durch Änderung der Ankerspannung) der Drehzahlbereich verändert werden kann, ohne daß ein Getriebeaustausch oder ein Wechsel der mit den unterschiedlichen mechanischen Getrieben versehenen Handstückteile erforderlich ist.

Ein wesentlicher Vorteil der Erfindung ist darin zu sehen, daß der bisher notwedige Basissatz an Hand- und Winkelstücken mit unterschiedlichen Getriebeabstufungen erheblich reduziert werden kann, wodurch sich ein weniger häufiges An- und Abkuppeln der Instrumente an bzw. vom Antriebsteil ergibt.

Vorteilhafte Weiterbildungen und Ausgestaltungen der Erfindung sind in abhängigen Ansprüchen enthalten.

Die im Anspruch 4 angegebene Lösung, nach der die den Magnetfluß ändernden Mittel dem mit dem Antrieb kuppelbaren Handstück zugeordnet sind, hat den Vorteil, daß motorseitig kein Eingriff erforderlich ist.

Mehrere Ausführungsbeispiele der Erfindung werden anhand der Figuren näher erläutert. Es zeigen:

Fig. 1 einen Antriebsmotor zum Antrieb eines zahnärztlichen Hand- und Winkelstückes in schaubildlicher Darstellung,

Fig. 2 bis 4 den prinzipiellen Aufbau des Antriebsmotors nach Fig. 1, im Längs- und Querschnitt.

Fig. 5 und 6 eine Variante zu der in den Fig. 3 und 4 dargestellten Ausführungsform,

Fig. 7 bis 9 ein weiteres Ausführungsbeispiel des erfindungsgemäßen Motors im Längs- und Querschnitt,

Fig. 10 das in Fig. 7 im Prinzip dargestellte Ausführungsbeispiel in einer schaublidlichen Darstellung.

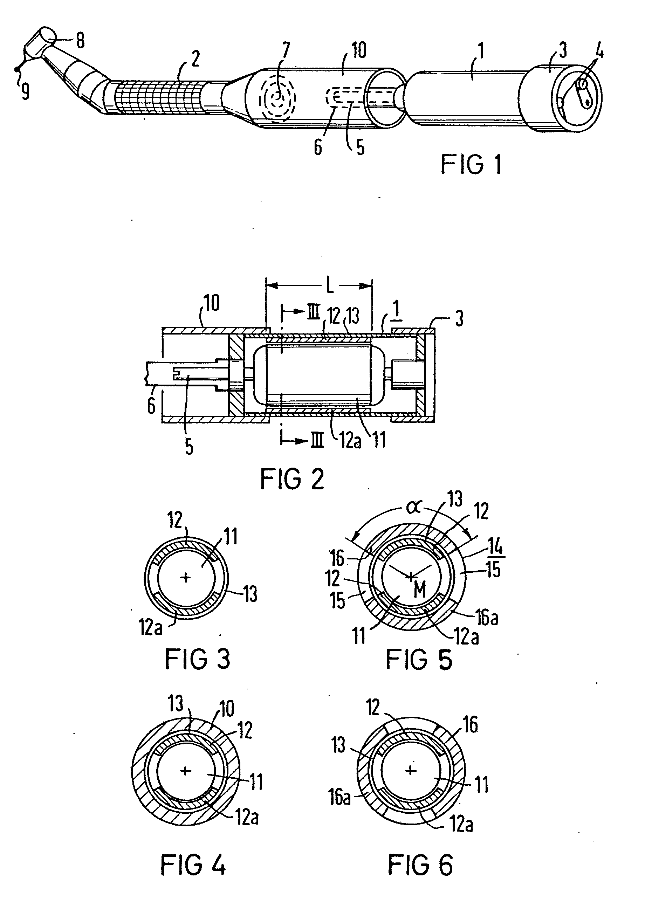

Die Fig. 1 zeigt in einer schaubildlichen Darstellung einen Antriebsmotor 1 für ein zahnärztliches Hand- und Winkelstück 2. Der Antriebsmotor 1, ein Elektro-Gleichstrommotor mit permanentmagnetischer Erregung, wird über einen nicht dargestellten Versorgungsschlauch, der am rückwärtigen Ende 3 des Motors befestigt wird, mit elektrischer Energie versorgt, wobei zur Stromübertragung vom Versorgungsschlauch zum Motor Kontaktglieder 4 vorgesehen sind.

Aus dem vorderen Ende des Motorgehäuses ragt eine die Antriebswelle 5 des Motors umgebende Schutzhülse 6 vor. Die Antriebswelle 5 steht bei aufgesetzten Handstück 2 in Eingriff mit einer Triebwelle 7 des Handstückes 2, die ein am Kopfteil 8 drehbar gelagertes Werkzeug 9 (z.B. Bohrer) antreibt.

Mit 10 ist eine am Handstück 2 befestigte, im Querschnitt kreisringförmige Hülse aus weichmagnetischem Werkstoff (St 37) bezeichnet, die bei an das Handstück angekuppeltem Antriebsmotor 1 den Motor bis zum rückwärtigen Ende 3 umschließt. Durch das Aufschieben der Hülse über den Antriebsmotor wird—infolge der Vergrößerung bzw. Verbesserung des Weicheisenrückschlusses—der Magnetfluß geändert, wodurch der normalerweise durch Änderung der Ankerspannun ohnehin erzielbare Drehzahlbereich zusätzlich noch um einen bestimmten Bereich nach unten hin geändert werden kann.

Die Fig. 2 zeigt in einer Prinzipdarstellung den Motor 1 mit teilweise aufgeschobener Hülse 10. In der Darstellung ist mit 11 der Rotor oder Anker des Motors bezeichnet, mit 12, 12a zwei diametral einander gegenüberstehende Dauermagnete mit einer Länge L und mit 13 das die Dauermagnete aufnehmende Motorgehäuse, welche Teile zusammen den Ständer des Motors bilden. Das Gehäuse 13 besteht ebenfalls aus weichmagnetischem Werkstoff und stellt für den Magnetfluß sowohl im Bereich der Dauermagnete als auch stirnseitig gleichzeitig den magnetischen Rückschluß der Statormagnete dar. Der so gebildete Rückschluß ist ein Stationärer Rückschluß, im Gegensatz zu der aufschiebbaren Hülse 10 aus ebenfalls einem Material mit weichmagnetischen Eigenschaften, die einen ortsveränderbaren Rückschluß darstellt. Die Wandstärke der über das Gehäuse 13 schiebbaren Hülse 10 ist im Vergleich zur Gehäusewandstärke wesentlich dicker; sie beträgt bei einer angenommenen Gehäusewandstärke von etwa 0,6 mm etwas das Drei- bis Vierfache dieser Wandstärke. Als Werkstoff für die Dauermagnete 12, 12a kommen all jene Werkstoffe in Frage, die eine möglichst flache Entmagnetisierungskennlinie aufweisen, vorteilhafterweise aber Cobald-Samarium (CoSm$_5$).

In den Fig. 3, 4, die den Antriebsmotor 1 entlang der Linie II—II in Fig. 2 im Querschnitt zeigen, ist der Antriebsmotor einmal ohne (Fig. 3) und einmal mit (Fig. 4) aufgeschobener Hülse 10 dargestellt. Wie im Anschluß an die Figurenbeschreibung noch näher erläutert wird, läßt sich durch die aufgeschobene Hülse 10 der magnetische Fluß sowohl bezüglich der Durchflutung des Ankers als auch im Hinblick auf den Rückfluß verändern. Bei aufgeschobener Hülse ist der magnetische Widerstand zwischen den Polenden der Magnete wesentlich kleiner als ohne Hülse. Durch die Vergrößerung des Flusses wird die Drehzahl entsprechend der Beziehung.

$$n \sim \frac{1}{\phi}$$

gegenüber der normalen Drehzahl bei nicht aufgeschobener Hülse verringert. Der Verringerungsfaktor für eine Drehzahlbereichsreduzierung beträgt je nach Stärke der Hülse etwa 0,5. Begrenzt wird der die Drehzahl bestimmende Fluß durch Erreichen der magnetischen Sättigung bei einer bestimmten Wandstärke der den Rückschluß bildenden Hülse.

Der durch Änderung des Flusses veränderbare Drehzahlbereich erlaubt es, auf Getriebeabstufungen im Handstück 2 zu verzichten, wodurch sich das Handstück 2 erheblich einfacher herstellen läßt. Die Handstücke brauchen lediglich, je nachdem, für welchen Drehzahlbereich sie benötigt werden, entweder mit oder ohne Hülse ausgestattet zu werden. Die Hülse 10 kann auch als separates Teil am Handstück 2 abnehmbar gehaltert oder auch Bestandteil des Antriebsmotors 1 sein.

In den Fig. 5 und 6 ist eine Variante zu der in den Fig. 2 bis 4 dargestellten Ausführung gezeigt. Anstelle der im Querschnitt kreisringförmigen Hülse 10 in Fig. 4 ist eine Hülse 14 mit diametral einander gegenüberliegenden Ausnehmungen 15 vorgesehen, die zwei stabförmige Abschnitte 16, 16a mit kreisringförmigem Querschnitt und einem Umfängs-

winkel von etwa 120° bilden. Die Abschnitte 16, 16a sind stirnseitig durch Stege od. dgl. aus vorzugsweise magnetisch nichtleitendem Material miteinander verbunden.

Die Hülse 14 mit den beiden Abschnitten 16, 16a ist gegen das Motorgehäuse 13 um 90° drehbar angeordnet, so daß die beiden Abschnitte 16, 16a in die in Fig. 6 dargestellte Lage gebracht werden können, in der sie die Enden der Dauermagnete 12, 12a jeweils überlappen, so daß ein guter Flußübergang von den Dauermagneten 12, 12a zu den Abschnitten 16, 16a gegeben ist. In dieser Stellung ist ein größerer Jochquerschnitt mit geringerem magnetischen Widerstand und damit ein besserer magnetischer Rückschluß im Vergleich zu der Stellung nach Fig. 5 vorhanden. Entsprechend der Beziehung

$$n \sim \frac{1}{\phi}$$

ergibt sich in der Stellung nach Fig. 6 wiederum eine reduzierte Drehzahl des Motors.

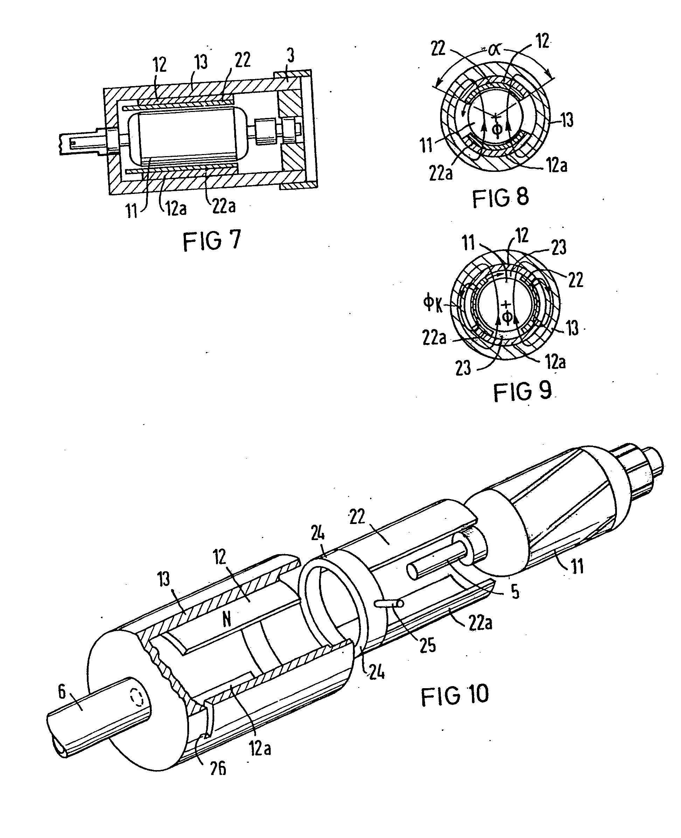

Bei dem Ausführungsbeispiel nach den Fig. 7 bis 10 wird eine Drehzahländerung durch eine Luftspaltänderung zwischen Stator und Rotor sowie durch einen magnetischen Kurzschluß (Nebenschluß) der Magnete erzielt.

Das wiederum aux weichmagnetischem Material bestehende Motorgehäuse bei dem Ausführungsbeispiel nach Fig. 7 ist relativ dickwandig, so daß an sich schon ein relativ hoher stationärer Rückschluß, aber kein Streufluß, nach außen vorhanden ist. Der magnetische Widerstand zwischen den Polenden der Magnete ist ebenfalls gering. Zwischen den Permanentmagneten 12, 12a und dem Rotor 11 sind zwei Rückschlußelemente 22, 22a aus weichmagnetischen Material angeordnet, die, wie aus den Fig. 8 und 9 ersichtlich ist, zwischen Stator 13 und Rotor 11 eingeschoben werden können, und zwar so daß der wirksame Luftspalt zwischen den Permanentmagneten 12, 12a und dem Rotor 11 verändert wird. Die Rückschlußelemente 22, 22a erstrecken sich im wesentlichen über den gleichen Winkelbereich $\alpha$ wie die Dauermagnete 12, 12a.

In der Anfangsstellung (Fig. 8) ist der Luftspalt relativ klein; der Anker 11 wird von gesamten Magnetfluß $\phi$ durchflutet. In der Endstellung (Fig. 9) dagegen ist zwischen Rotor 11 und Dauermagnete 12, 12a ein relativ großer Luftspalt 23 und damit ein großer magnetischer Widerstand vorhanden; außerdem wird ein Teil des gesamten Magnetflusses über die gegenüber der Stellung nach Fig. 8 um 90° verdrehten Rückschlußelemente 22, 22a kurzgeschlossen. Der Magnetfluß im Anker ist dadurch im Vergleich zu der Stellung nach Fig. 8 kleiner, die Drehzahl nach der Beziehung

entsprechend höher.

$$n \sim \frac{1}{\phi}$$

In Fig. 10 ist das in den Fig. 7 bis 9 schematisch dargestellte Ausführungsbeispiel nochmals in schaubildlicher Darstellung aufgezeigt, insbesondere um die Verstellmöglichkeit für die Rückschlußelemente 22, 22a aufzuzeigen. Die beiden Rückschlußelemente sind durch einen Ring 24 gehalten, der zur Verhinderung magnetischer Kurzschlüsse aus einem nichtmagnetischen Werkstoff besteht. Am Ring 24 steht radial ein Betätigungsstift 25 vor, der aus einer im Motorgehäuse 13 über einen Winkelbereich von 90° angeordneten Führungsnut 26 radial vorsteht. Dadurch kann eine Verstellung von der in Fig. 8 gezeigten Stellung in die in Fig. 9 dargestellte Lage bei Bedarf von Hand leicht durchgeführt werden.

Aus den Ausführungsbeispielen lassen sich drei Grundprinzipien einer Drehzahländerung durch Flußänderung ableiten:

1) Flußänderung durch Änderung des Querschnittes im Weicheisenrückschluß,
2) Flußänderung durch Luftspaltänderung, und
3) Flußänderung duch magnetischen Kurzschluß (Fig. 7), wobei, wie aus den Ausführungsbeispielen ersichtlich ist, auch eine Kombination mehrerer der drei Prinzipien möglich ist. So dienen die bei der zuletzt dargestellten Ausführungsform verstellbaren Rückschlußelemente einerseits in Stellung nach Fi. 8 zur Überbrückung des Luftspaltes, andererseits schließen sie in Stellung nach Fig. 9 Teile der Magnete kurz.

Bei der *Lösung nach 1)* wird zunächst davon ausgegangen, daß die Querschnitte von Anker und Rückschluß so bemessen sind, daß die magnetische Induktion im Anker $(B_A)$ und im Rückschluß $(B_R)$ unterhalb der Sättigungsinduktion des weichmagnetischen Werkstoffes liegt und daß die Permeabilität für Eisen sehr viel größer ist als für Luft. Bei ausreichender Dimensionierung der Eisenwege fällt dann die gesamte magnetische Spannung normalerweise im Luftspalt zwischen Magnete und Anker ab. Wird der Querschnitt des Eisenrückschlusses so weit verringert, daß die Sättigungsinduktion des Rückschlußmaterials erreicht wird, so wird der Magnetfluß im wesentlichen vom Querschnitt des Eisenrückschlusses begrenzt. Bei Vernachlässigung des Anteils des Streuflusses am Gesamtfluß ergibt sich näherungsweise die Beziehung $\phi \sim q_R$, wobei $q_R$ der Querschnitt des gesättigten Weicheisenrückschlusses ist.

Beim *Lösungsprinzip nach 2)* wird davon ausgegangen, daß die magnetischen Widerstände des Ankers und des weichmagnetischen Rückschlusses gegenüber den sich im Magnetkreis befindlichen Luftspaltwiderständen vernachlässigbar klein sind.

Für den Fluß $\phi$ im Magnetkreis gilt kann die Gleichung

$$\phi = \frac{H_m \cdot l_m}{\Sigma R_v}$$

und damit

$$\phi \sim \frac{1}{R_v}$$

Dabei ist $H_m$ die Feldstärke im Magneten, $l_m$ die Länge der Feldlinien im Magneten und $\Sigma R_v$ die Summe aller Luftspaltwiderstände im Magnetkreis.

Dabei ist

$$R_v = \frac{l_v}{\mu_o \cdot q_v}$$

Mit $l_v$ wird die Länge der Feldlinien im jeweiligen Luftspalt bezeichnet, $q_v$ ist die von Feldlinien durchsetzte Luftspaltfläche und $\mu_o$ die Permeabilitätskonstante in Luft.

Mit obigen Beziehungen ergibt sich mit Änderung der Luftspaltlänge eine Flußänderung nach der Beziehung

$$\phi \sim \frac{1}{l_v}$$

Bei dem *Lösungsprinzip nach 3)* wird davon ausgegangen, daß der Magnetfluß im Anker vom Fluß der Magnete abzüglich der Flußanteile im Kurzschluß abhängt, und zwar nach der Beziehung

$$\phi \text{ Anker} = \phi \text{ Magnet} - \phi \text{ Kurzschluß}$$

Das Maß der erzielbaren Feldschwächung hängt von der veränderbaren Luftspaltlänge und vom Anteil der kurzgeschlossenen Magnetfläche ab.

Mit den aufgezeigten Lösungsmöglichkeiten kann die Drehzahl über einen größeren Bereich (etwa um den Faktor 0,5 bis max. 0,3) verändert werden. Zusätzlich zu dieser Grobeinstellung kann für eine Feineinstellung in bekannter Weise die Drehzahl noch durch Änderung der Ankerspannung verändert werden.

**Patentansprüche**

1. Gleichstrom-Kleinstmotor (1) mit permanentmagnetischer Erregung zum Antrieb eines in einem zahnärztlichen Handinstrument (2) drehbar gelagerten Werkzeuges (9), enthaltend ein zylindrisches Motorgehäuse mit einer einen stationären Rückschluß bildenden und zu diesem Zweck aus weichmagnetischem Material bestehenden Hülse, (13) in der diametral einander gegenüberliegend paarweise Dauermagnete (12, 12a) zur Erregung des Ankers (11) angeordnet sind, dadurch gekennzeichnet, daß konzentrisch zur Hülse (13) im Luftspalt zwischen Anker (11) und Dauermagnete (12, 12a) eine der Anzahl der vorhandenen Dauermagnete entsprechende Anzahl von den Magnetfluß des Motors beeinflussenden Rückschlußelementen (22, 22a) aus weichmagnetischem Werkstoff verdrehbar angeordnet, ist, die zum Zwecke der Umschaltung des Drehzahlbereiches von niedrig auf hoch, und umgekehrt, an einem Verbindungsteil (24) befestigt sind, welches eine durch das Motorgehäuse nach außen greifendes Betätigungsglied (25) enthält, mit dem die Rückschlußelemente aus einer den Magnetfluß durch den Anker verstärkenden ersten Arbeitsstellung (Fig. 8) mit dem niedrigen Drehzahlbereich in eine zweite, den Magnetfluß schwächende Arbeitsstellung (Fig. 2) mit dem hohen Drehzahlbereich, und umgekehrt, schaltbar sind.

2. Gleichstrom-Kleinstmotor nach Anspruch 1, dadurch gekennzeichnet, daß die Rückschlußelemente (22, 22a) in einem stirnseitigen Ring (24) aus nichtmagnetischem Werkstoff gefaßt sind und an dem Ring das Betätigungsglied (25) befestigt ist, welches durch eine Durchbrechung (26) des Stators (12, 13) hindurchgreift und dort über einen die beiden Arbeitsstellungen begrenzenden Drehwinkel geführt ist.

3. Gleichstrom-Kleinstmotor nach Anspruch 2, dadurch gekennzeichnet, daß Dauermagnete (12, 12a) und Rückschlußelemente (22, 22a) im Querschnitt einen Ausschnitt eines Kreisringes (Sektor) bilden und der Umfangswinkel ($\alpha$) der Rückschlußelemente (22, 22a) so bemessen ist, daß ihre Enden in beiden Arbeitsstellungen (Fig. 8 und 9) von den Dauermagneten (12, 12a) überdeckt sind.

4. Gleichstrom-Kleinstmotor (1) mit permanentmagnetischer Erregung zum Antrieb eines in einem zahnärztlichen Handinstrument (2) drehbar gelagerten Werkzeuges (9), enthaltend ein zylindrisches Motorgehäuse mit einer einen stationären Rückschluß bildenden ersten Hülse (13) aus weichmagnetischem Material, in der diametral einander gegenüberliegend paarweise Dauermagnete (12, 12a) zur Erregung des Ankers (11) angeordnet sind, dadurch gekennzeichnet, daß die erste Hülse (13) eine relativ dünne Wandstärke aufweist, über die eine den ortsveränderbaren Rückschluß bildende zweite Hülse (10) oder im Querschnitt Ausschnitte eines Kreisringes bildende Abschnitte (16, 16a) aus weichmagnetischem Werkstoff mit im Vergleich zur ersten (13) Hülse wesentlich dickeren Wandstärke aufschiebbar ist bzw. sind, wobei die den ortsveränderbaren Rückschluß bildende zweite Hülse (10, 14) bzw. die vorgenannten Abschnitte (16, 16a) Bestandteil eines mit der Antriebswelle (5) des Motors (1) kuppelbaren, das Werkzeug (9) aufnehmenden Handstückteils (2) sind, und diese zweite Hülse (10, 14) so bemessen ist, daß sie im gekuppelten Zustand das Motorgehäuse (13) zumindest über einen Teil der Länge (L) der Dauermagnete (12, 12a) umgibt.

5. Gleichstrom-Kleinstmotor nach Anspruch 4, dadurch gekennzeichnet, daß die den ortsveränderbaren Rückschluß bildende zweite Hülse (10, 14) längs der Dauermagnete (12, 12a) sich erstreckende Ausnehmungen (15) enthält, die die Hülse über die Länge (L) der Magnete (12, 12a) gesehen in zwei im Querschnitt Ausschnitte eines Kreisringes darstellende Abschnitte (16, 16a) unterteilt, und daß die Hülse (10, 14) bzw. die Abschnitte (16, 16a) um ihren Zentripunkt (M) gegen die Dauermagnete (12, 12a) verdrehbar sind.

6. Gleichstrom-Kleinstmotor nach Anspruch 5, dadurch gekennzeichnet, daß der Umfangswinkel (α) für die Dauremagnete (12, 12a) und die Abschnitte (16, 16a) so bemessen sind, daß die Abschnitte (16, 16a) in den Endstellungen die Polenden der Magnete (12, 12a) überdecken.

7. Gleichstrom-Kleinstmotor nach Anspruch 6, dadurch gekennzeichnet, daß die Abschnitte (16, 16a) und die Dauermagnete (12, 12a) einen Umfangswinkel α=120° aufweisen.

## Claims

1. A permanent magnet miniature d.c. motor (1) for operating a tool (9) which is pivotally mounted in a manual dental instrument (2), comprising a cylindrical motor housing having a sleeve (13) which forms a stationary return path and for this purpose is made of a soft magnetic material and in which permanent magnets (12, 12a) for exciting the armature (11), are arranged in diametrically opposite pairs, characterised in that concentrically with the sleeve (10, 13), in the air gap between the armature (11) and the permanent magnets (12, 12a), there are rotatably arranged a number of return elements (22, 22a), which are made of a soft magnetic material and influence the magnetic flux of the motor and which correspond in number to the number of permanent magnets present, which return elements, for the purpose of switching over the rotational speed range from low to high and *vice versa*, are fixed to a connecting member (24) which is provided with an operating member (25) which extends through the motor housing to the outside and by means of which the return elements can be switched over from a first operating position (Figure 8) in which the magnetic flux through the armature is increased at the low speed range, to a second operating position (Figure 9) in which the magnetic flux is reduced at the high speed range, and *vice versa*.

2. A miniature d.c. motor as claimed in Claim 1, characterised in that the return elements (22, 22a) are mounted on a ring (24) made of nonmagnetic material, and that the operating member (25) is secured to the ring, said member (25) extending through a gap (26) in the stator (12, 13), and being guided through an angle of rotation delimiting the two operating positions.

3. A miniature d.c. motor as claimed in Claim 2, characterised in that the permanent magnets (12, 12a) and the return elements (22, 22a) in cross-section form a sector of an annulus, the angle at the centre (α) subtended by the return elements (22, 22a) being such that the ends of said elements are covered by the permanent magnets (12, 12a) in both operating positions (Figures 8 and 9).

4. A permanent magnet miniature d.c. motor (1) for operating a tool (9) which is pivotally mounted in a manual dental instrument (2), comprising a cylindrical motor housing having a first sleeve (13) which forms a stationary return path and is made of a soft magnetic material and in which permanent magnets (12, 12a) for exciting the armature (11) are arranged in diametrically opposite pairs, characterised in that the first sleeve (13) has a relatively small wall thickness over which can be slipped a second sleeve (10) or sections (16, 16a) forming in cross-section parts of an annulus, said second sleeve or said sections consisting of a soft magnetic material and having a wall thickness which is substantially thicker than that of the first sleeve (13), said sleeve or sections forming a movable return path, wherein the second sleeve (10, 14), the sections (16, 16a) as the case may be, forms or form part of a hand-piece member (2) which accommodates the tool (9) and can be coupled to the driving shaft (5) of the motor (1), and said second sleeve (10, 14) is so dimensioned that in the coupled state, it surrounds the motor housing (13) over at least a part of the length (L) of the permanent magnets (12, 12a).

5. A miniature d.c. motor as claimed in Claim 4, characterised in that the second sleeve (10, 14) which forms the movable return path comprises openings (15) which extend along the permanent magnets (12, 12a) and, when viewed over the length (L) of the magnets (12, 12a) divide the sleeve into two sections (16, 16a) which in cross-section are parts of an annulus, and that the sleeve (10, 14) or the sections (16, 16a), as the case may be, can be rotated about its or their central point (M) about the permanent magnets (12, 12a).

6. A miniature d.c. motor as claimed in Claim 5, characterised in that the angle (α) subtended by the permanent magnets (12, 12a) and the sections (16, 16a) at the centre, has a value such that in the end positions, the sections (16, 16a) cover the pole ends of the magnets (12, 12a).

7. A miniature d.c. motor as claimed in Claim 6, characterised in that the sections (16, 16a) and the permanent magnets (12, 12a) subtend an angle at the centre α=120°.

## Revendications

1. Moteur miniature (1) à courant continu, du type à excitation par aimants permanents pour entraîner un outil (9) monté à rotation dans un instrument à main pour dentiste, comportant un carter de moteur cylindrique avec une douille (13) formant une culasse fixe et constituée de ce fait avec un matériau magnétique doux, des aimants permanents (12, 12a) étant disposés par paires diamétralement opposées dans ladite douille pour l'excitation de l'induit (11), caractérisé par le fait que l'on dispose, concentriquement à la douille (10, 13), dans l'entrefer formé entre l'induit (11) et les aimants permanents (12, 12a), un nombre d'éléments de culasse (22, 22a) décalés angulairement, correspondant au nombre d'aimants permanents, influençant le flux magnétique du moteur et réalisés avec un matériau magnétique doux, lesdits éléments de culasse étant fixés, pour commuter la plage des vitesses de rotation d'un régime lent à un régime rapide, et inversement, à un élément de liaison (24) qui comporte un organe de manoeuvre (25) s'étendant hors du carter du moteur et à l'aide duquel les éléments de culasse peuvent être amenés d'une première position de travail (figure 8) qui renforce le flux magnétique qui passe par l'induit et qui correspond au régime de rotation lent, dans une seconde position de travail (figure 9) qui affaiblit le flux magnétique et qui correspond au régime de rotation rapide, et inversement.

2. Moteur miniature à courant continu selon la revendication 1, caractérisé par le fait que les éléments de culasse (22, 22a) sont montés dans une bague frontale (24) en un matériau non magnétique et par le fait qu'à la bague est fixé l'organe de manoeuvre (25) qui passe par une ouverture (26) ménagée dans le stator (12, 13) et y est guidé sur un angle de rotation qui limite les deux positions de travail.

3. Moteur miniature à courant continu selon la revendication 2, caractérisé par le fait que les aimants permanents (12, 12a) et les éléments de culasse (22, 22a) forment, en section transversale, une section d'un anneau de cercle (secteur) et que l'angle périphérique (α) des éléments de culasse (22, 22a) est dimensionné de telle manière que leurs extrémités sont recouvertes par les aimants permanents (12, 12a) dans des deux positions de travail (figures 8 et 9).

4. Moteur miniature (1) à courant continu, du type à excitation par aimants permanents pour entraîner un outil (9) monté à rotation dans un instrument à main pour dentiste, comportant un carter de moteur cylindrique avec une douille formant une culasse fixe et constituée avec un matériau magnétique doux, des aimants permanents (12, 12a) étant disposés par paires diamétralement opposées dans ladite douille pour l'excitation de l'induit (11), caractérisé par le fait que la première douille (13) présente une épaisseur de paroi relativement mince sur laquelle peut être glissée une seconde douille (10) constituant la culasse dont l'emplacement est susceptible d'être modifié, ou des sections (16, 16a) qui forment des sections d'un anneau de cercle, réalisés avec un matériau magnétiquement doux et à épaisseur de paroi notablement supérieure à celle de la première douille (13), la seconde douille (10, 14) qui constitue la culasse à emplacement variable, ou lesdites sections (16, 16a) sont des éléments constitutifs d'un élément de pièce à main (2) susceptible de recevoir l'outil (9) et capable d'être accouplé à l'arbre d'entraînement (5) du moteur (1), ladite seconde douille (10, 14) étant dimensionnée de telle façon que pour chaque état d'accouplement elle entoure le carter du moteur (13) au moins sur une partie de la longueur (L) des aimants permanents (12, 12a).

5. Moteur miniature à courant continu selon la revendication 4, caractérisé par le fait que la seconde douille (10, 14), qui forme la culasse à position variable comporte des ouvertures (15) qui s'étendent le long des aimants permanents (12, 12a), évidements qui subdivisent, si l'on regarde la douille sour la longueur (L) des aimants (12, 12a), en deux sections (16, 16a) représentant, en section transversale des parties d'un anneau de cercle, et que la douille (10, 14) ou les sections (16, 16a) sont susceptibles d'être décalés angulairement par rapport aux aimants permanents (12, 12a), autour de leur point central (L),

6. Moteur miniature à courant continu suivant la revendication 5, caractérisé par le fait que l'angle périphérique (α) pour les aimants permanents (12, 12a) et les sections (16, 16a) sont dimensionnés de telle façon que les sections (16, 16a) recouvrent les extrémités des pôles des aimants (12, 12a), dans les positions d'extrémité.

7. Moteur miniature à courant continu suivant la revendication 6, caractérisé par le fait que les sections (16, 16a) et les aimants permanents (12, 12a) présentent un angle périphérique $\alpha = 120°$.

FIG 1

FIG 2

FIG 3

FIG 5

FIG 4

FIG 6

FIG 7

FIG 8

FIG 9

FIG 10